# EUROPEAN PATENT SPECIFICATION

(11) **EP 4 438 365 B1**
(45) Date of publication and mention of the grant of the patent: **20.08.2025**
(21) Application number: 24167313.6
(22) Date of filing: 28.03.2024
(51) Int. Cl.: B60K 1/04, B62D 21/02

(54) **A ROAD VEHICLE**
STRASSENFAHRZEUG
VÉHICULE ROUTIER

(30) Priority: 29.03.2023 NL 2034457
(43) Date of publication of application: 02.10.2024
(73) Proprietor: DAF Trucks N.V., 5643 TW Eindhoven (NL)
(72) Inventor: VAN KNIPPENBERG, Ronald Antonius Johannes, 5643 TW Eindhoven (NL); LIEBREGTS, René Mathias Johannes, 5643 TW Eindhoven (NL); LEIJSSEN, Henricus Johannes, 5643 TW Eindhoven (NL); GOESSEN, Nick Elisabeth Pierre, 5643 TW Eindhoven (NL)
(74) Representative: V.O.

(56) References cited:
- US-A1- 2022 169 126
- US-A1- 2023 001 986
- US-B1- 10 493 837

## Description

The invention relates to a road vehicle.

Such a road vehicle is e.g. known from EP4088959A1. This known road vehicle comprises a power supply system for supplying power to a power system of the road vehicle and comprises a battery mounting system comprising a bracket assembly that is provided above and below the chassis beams of the frame of the road vehicle. First cases are provided on the bracket assembly and first power battery modules are suspended inside the first cases. The bracket assembly comprises an upper bracket body and two lower bracket bodies, wherein each of the lower bracket bodies is connected to the lower end of each of the first cases in one-to-one correspondence. The upper bracket body and the lower bracket bodies are parallel to each other and connected by angular beams. The lower bracket bodies are connected by horizontal beams extending transverse to the chassis beams. The bracket assembly is connected to the chassis beams through bolts. The connection position between the bracket assembly and the chassis beams can be located at the front, middle or rear of the frame. The upper bracket body is connected to the frame by bolts, and in order to further increase the bonding force between the bracket and the frame, a reinforced rib plate is used for furthering reinforcing the upper bracket body and the frame. US 2022/169126 A1 discloses an electric truck.

The present invention in particular relates to heavy load road vehicles such as trucks. Trucks in general are used to transport heavy loads over long distances. Particularly in case of heavy duty long haulage applications a plurality of battery modules is equipped on the trucks, each module weighing about 850 kg or more. Typically these battery modules are fragile and suffer from vibrations, shocks, and deformation.

A truck and in particular a tractor to pull a semi-trailer is conventionally built upon a chassis formed by two elongate chassis beams connected by cross beams, i.e. a so called ladder frame. Such a ladder frame has a slender shape resulting in an elasticity that allows attached components to swing and vibrate, when the truck is in motion. These vibrations may be damaging to the battery packs that are attached to the frame. The slender shape of the ladder frame also allows longitudinal twisting of the truck, due to the forces and vibrations when the truck is in motion. Such a twisting may also be detrimental to the battery packs that are attached to the frame.

Although EP4088959A1 provides some reinforcement between battery module mounting system and chassis it is however desired, in view of the increased number of battery modules used, and thus inter alia the increased weight of the battery modules, to further increase the stiffness of the combination of chassis and battery module mounting system without adding to much weight to either the chassis or the battery module mounting system in view of energy consumption. In particular, due to the desire to use an increased number of battery modules, thus adding to the weight of the components connected to the chassis and increasing global twisting of the chassis, which could lead to damage of the battery nodules, it is an object of the invention to provide an alternative road vehicle in which the stiffness of the chassis and the battery module mounting system is increased while keeping the total weight of these components relatively low.

In accordance with the invention this object is obtained by a road vehicle according to claim 1. By means of the U-shaped top plate the chassis is strongly reinforced, leading to a structure that is very stiff, strongly reducing twisting of the chassis beams which could damage the battery modules. Due to the battery module carrier beams which are attached to the arm portions of a respective U-shaped top plate via the attachment brackets the construction of the battery module mounting system can be realized in a rather lightweight manner resulting in weight and costs reductions.

In an embodiment of a road vehicle according to the invention the base portion of the U-shaped top plate is narrower in a middle section than at end sections adjacent the arm portions. In this manner sufficient longitudinal stiffness is provided to the chassis while the weight of the U-shaped top plate can be kept relatively low. Preferably, the base portion of the U-shaped top plate is provided with cut-aways for providing the base portion of the U-shaped top plate with diagonal cross elements, providing a further weight reduction without detrimentally influencing the longitudinal stiffness.

In a further embodiment of a road vehicle according to the invention the thickness of the battery module carrier beam is smaller in a middle section thereof than at the free ends thereof. This provides a stiff area in vertical direction of the battery module carrier beam while on the other hand chassis torsion can be handled relatively well. These latter effects are more pronounced when the height of the battery module carrier beam is larger in a middle section thereof than at the free ends thereof.

In a still further embodiment of a road vehicle according the invention the battery module is supported on the battery module carrier beams by means of elastic connectors. In this manner vibrations and twisting of the chassis are passed on to the battery modules in a lesser extent, reducing the risk of damaging the battery modules.

The invention will be further explained with reference to the Figures, in which non-limiting exemplary embodiments of a road vehicle according to the invention are schematically shown.

### BRIEF DESCRIPTION OF THE FIGURES

Figure 1 schematically shows a side view of an embodiment of a road vehicle according to the invention;
Figure 2 schematically shows a perspective view of part of a chassis and the battery module mounting system of an embodiment of a road vehicle according to the invention;
Figure 3 schematically shows a perspective view of a part of the embodiment of Figure 2 seen from a more forward position;
Figure 4 schematically shows a top view of Figure 2;
Figure 5 schematically shows a perspective view of an embodiment of a battery mounting unit without battery modules; and
Figure 6 schematically shows a front view of the embodiment of Figure 2.

### DETAILED DESCRIPTION

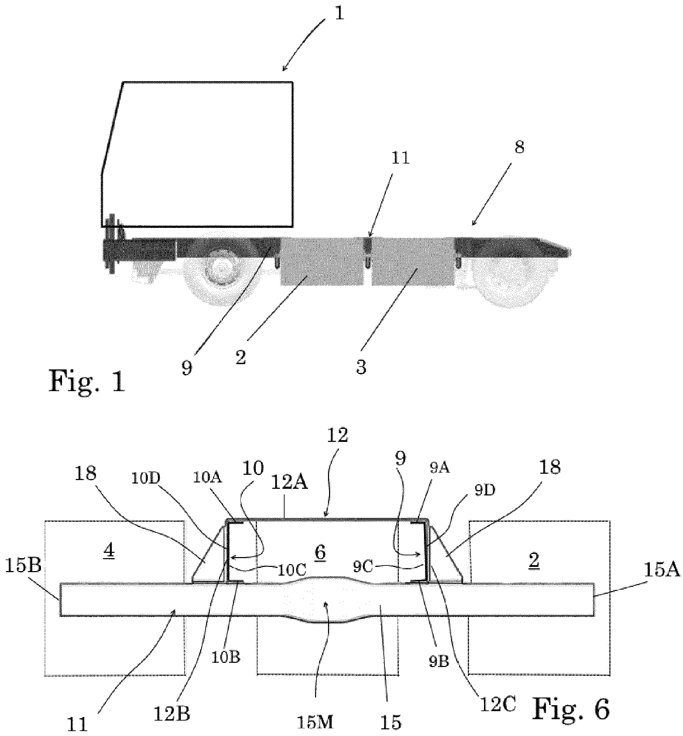

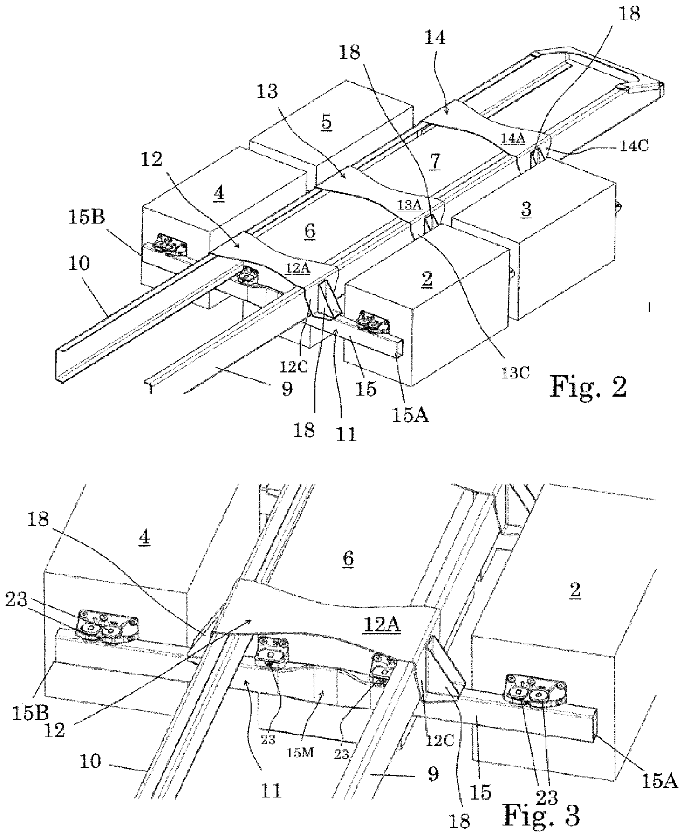

In Figure 1 a side view of an embodiment of a road vehicle 1, in the shown embodiment a tractor for pulling a trailer, according to the invention is schematically shown. The road vehicle 1 is provided with a number of battery modules 2, 3, 4, 5, 6, 7 (see also Figure 2), and has a chassis 8 comprising a first elongate chassis beam 9 and a second elongate chassis beam 10. Both chassis beams 7, 8 extend along a length of the road vehicle 1.

As indicated in Figure 6 the first and second elongate chassis beam 9, 10 each comprise an upper surface 9A, 10A and a lower surface 9B, 10B, an inner surface 9C, 10C and an outer surface 9D, 10D. The inner surfaces 9C, 10C of the first and second chassis beams 9, 10 face each other while the outer surfaces 9D, 10D of the first and second chassis beams 9, 10 face away from each other. It is usual that the chassis 8 further comprises cross beams that connect the first elongate chassis beam 9 and the second elongate chassis beam 10, however these are not shown in the Figures for clarity purposes.

The road vehicle 1 further comprises a battery module mounting system 11 for mounting the battery modules 2, 3, 4, 5, 6, 7 to the chassis 8, the battery mounting system 11 comprising at least two battery mounting units embodiments of which are depicted and described in a more detailed manner with reference to Figures 2 to 6.

As shown in the drawings each of the battery mounting units comprises a U-shaped top plate 12, 13, 14 having a base portion 12A, 13A, 14A and two arm portions 12B, 12C; 13B, 13C; 14B, 14C. The arm portions 12B, 12C; 13B, 13C; 14B, 14C extend downwards from the base portion 12A, 13A, 14A. Each of the arm portions 12B, 12C; 13B, 13C; 14B, 14C is connected to a respective one of the outer surfaces 9D, 10D of the first and second chassis beams 9, 10, for example by means of bolts and nuts. The base portion 12A, 13A, 14A thus horizontally extends over the upper surfaces 9A, 10A of the first and second elongate chassis beams 9, 10 providing increased stiffness to the chassis.

Each battery mounting unit further comprises a battery module carrier beam 15, 16, 17, preferably formed by a hollow, substantially rectangular metal beam, that extends below and transverse to the first or second elongate chassis beam 9, 10. The battery module carrier beam 15, 16, 17 has free ends 15A, 15B; 16A, 16B; 17A, 17B positioned outwardly at a distance from the outer surface 9D, 10D of the first and second elongate chassis beams 9, 10. By means of attachment brackets 18 the battery module carrier beam 15, 16, 17 is attached to the arm portions 12B, 12C; 13B, 13C; 14B, 14C of the respective U-shaped top plate 12, 13, 14.

The distance or spacing between the battery module carrier beams 15, 16, 17 of two adjacent battery mounting units is such that a battery module 2, 3, 4, 5, 6, 7 can be received and positioned between two adjacent battery mounting units. Preferably, and as indicated in the drawings, the battery modules 2, 3, 4, 5, 6, 7 are supported on the battery module carrier beams 15, 16, 17 by means of a number of elastic connectors 23.

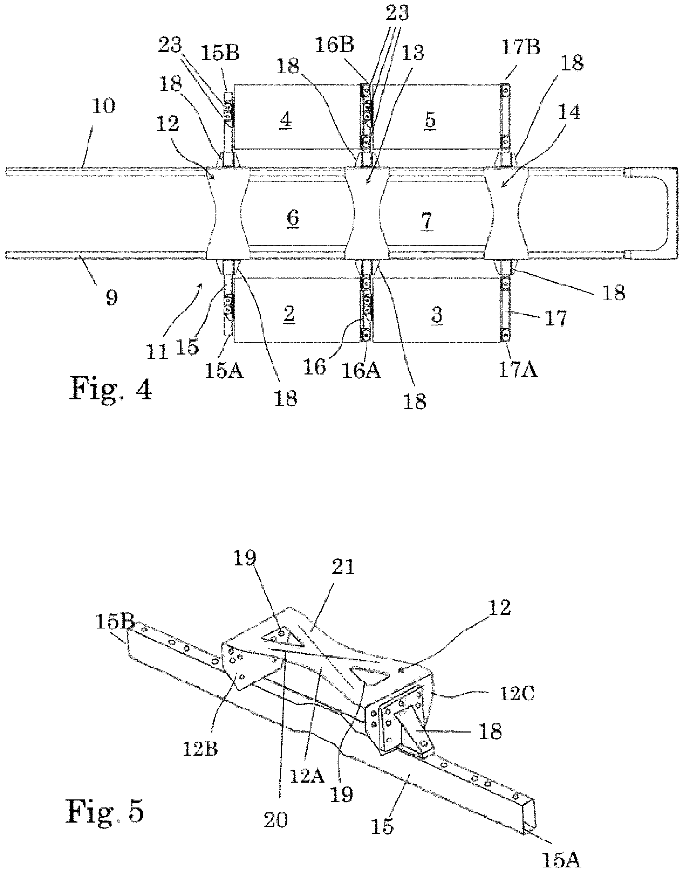

As for example can be seen in Figures 3 and 5 the base portion 12A, 13A, 14A of the U-shaped top plate 12, 13, 14 is narrower in a middle section than at end sections adjacent the arm portions 12B, 12C; 13B, 13C; 14B, 14C for providing sufficient longitudinal stiffness to the chassis while the weight of the U-shaped top plate can be kept relatively low. In the embodiment shown in Figure 5, the base portion 12A of the U-shaped top plate 12 is provided with cut-aways 19 providing the base portion 12A with diagonal cross elements 20, 21 (the diagonal extension of the elements being indicated by dotted lines) leading to a further weight reduction without detrimentally influencing the longitudinal stiffness.

As indicated in the embodiment of Figures 3 and 6 the thickness of the battery module carrier beam 15 is smaller in a middle section 15M thereof than at the free ends 15A, 15B thereof, and the height of the battery module carrier beam 15 is larger in this middle section 15M than at the free ends 15A, 15B. This provides a stiff area in vertical direction of the battery module carrier beam 15 while on the other hand chassis torsion can be handled relatively well.

## Claims

1. A road vehicle (1) provided with:
- a battery module (2, 3, 4, 5, 6, 7);
- a chassis (8) comprising a first elongate chassis beam (9) and a second elongate chassis beam (10), both extending along a length of the road vehicle (1), each first and second elongate chassis beam (9, 10) comprising an upper surface (9A, 10A) and a lower surface(9B, 10B), an inner surface (9C, 10C) and an outer surface (9D, 10D), the inner surfaces (9C, 10C) of the first and second chassis beams (9, 10) facing each other, the outer surfaces (9D, 10D) of the first and second elongate chassis beams (9, 10) facing away from each other;
a battery module mounting system (11) for mounting the battery module (2, 3, 4, 5, 6, 7) to the chassis (8);
**characterized in that** the battery mounting system (11) comprises at least two battery mounting units each comprising:
- a U-shaped top plate (12, 13, 14) having a base portion (12A, 13A, 14A) and arm portions (12B, 12C; 13B, 13C; 14B, 14C), each of the arm portions (12B, 12C; 13B, 13C; 14B, 14C) being connected to a respective one of the outer surfaces (9D, 10D) of the first and second chassis beams (9, 10), the base portion (12A, 13A, 14A) horizontally extending over the upper surfaces (9A, 10A) of the first and second elongate chassis beams (9, 10);
- a battery module carrier beam (15, 16, 17) extending below and transverse to the first or second elongate chassis beam (9, 10), the battery module carrier beam (15, 16, 17) having free ends (15A, 15B; 16A, 16B; 17A, 17B) positioned outwardly at a distance from the outer surface (9D, 10D) of the first and second elongate chassis beams (9, 10); and
- attachment brackets (18) attaching the battery module carrier beam (15, 16, 17) to the arm portions (12B, 12C; 13B, 13C; 14B, 14C) of the respective U-shaped top plate (12, 13, 14),
wherein the battery module carrier beams (15, 16, 17) of two adjacent battery mounting units are spaced from each other for receiving a respective battery module (2, 3, 4, 5, 6, 7).

2. The road vehicle (1) according to claim 1, wherein the base portion (12A, 13A, 14A) of the U-shaped top plate (12, 13, 14) is narrower in a middle section than at end sections adjacent the arm portions (12B, 12C; 13B, 13C; 14B, 14C).

3. The road vehicle (1) according to claim 1 or 2, wherein the base portion (12A, 13A, 14A) of the U-shaped top plate (12, 13, 14) is provided with cut-aways (19) for providing the base portion (12A, 13A, 14A) of the U-shaped top plate (12, 13, 14) with diagonal cross elements (20, 21).

4. The road vehicle (1) according to any one of the preceding claims, wherein the thickness of the battery module carrier beam (15, 16, 17) is smaller in a middle section thereof than at the free ends (15A, 15B; 16A, 16B; 17A, 17B) thereof.

5. The road vehicle (1) according to any one of the preceding claims, wherein the height of the battery module carrier beam (15, 16, 17) is larger in a middle section thereof than at the free ends (15A, 15B; 16A, 16B; 17A, 17B) thereof.

6. The road vehicle (1) according to any one of the preceding claims, wherein the battery module (2, 3, 4, 5, 6, 7) is supported on the battery module carrier beams (15, 16, 17) by means of elastic connectors (22).

## Patentansprüche

1. Straßenfahrzeug (1), ausgestattet mit:
- einem Batteriemodul (2, 3, 4, 5, 6, 7);
- einem Fahrgestell (8), das einen ersten länglichen Fahrgestellbalken (9) und einen zweiten länglichen Fahrgestellbalken (10) umfasst, die sich beide entlang einer Länge des Straßenfahrzeugs (1) erstrecken, wobei jeder erste und zweite längliche Fahrgestellbalken (9, 10) eine obere Fläche (9A, 10A) und eine untere Fläche (9B, 10B), eine Innenfläche (9C, 10C) und eine Außenfläche (9D, 10D) aufweist, die Innenflächen (9C, 10C) des ersten und des zweiten Fahrgestellbalkens (9, 10) einander zugewandt sind, wobei die Außenflächen (9D, 10D) des ersten und des zweiten länglichen Fahrgestellbalkens (9, 10) voneinander weg weisen;
- ein Batteriemodulmontagesystem (11) zum Montieren des Batteriemoduls (2, 3, 4, 5, 6, 7) am Fahrgestell (8);
**dadurch gekennzeichnet, dass** das Batteriemontagesystem (11) mindestens zwei Batteriemontageeinheiten aufweist, die jeweils umfassen:
- eine U-förmige obere Platte (12, 13, 14) mit einem Basisabschnitt (12A, 13A, 14A) und Armabschnitten (12B, 12C; 13B, 13C; 14B, 14C), wobei jeder der Armabschnitte (12B, 12C; 13B, 13C; 14B, 14C) mit einer der Außenflächen (9D, 10D) des ersten und des zweiten Fahrgestellbalkens (9, 10) verbunden ist, wobei sich der Basisabschnitt (12A, 13A, 14A) horizontal über die oberen Flächen (9A, 10A) der ersten und zweiten länglichen Fahrgestellbalken (9, 10) erstreckt;
- einen Batteriemodulträgerbalken (15, 16, 17), der sich unterhalb und quer zu dem ersten oder zweiten länglichen Fahrgestellbalken (9, 10) erstreckt, wobei der Batteriemodulträgerbalken (15, 16, 17) freie Enden (15A, 15B; 16A, 16B; 17A, 17B) aufweist, die nach außen in einem Abstand von der Außenfläche (9D, 10D) des ersten und zweiten länglichen Fahrgestellbalkens (9, 10) angeordnet sind; und
- Befestigungsklammern (18), die den Batteriemodulträgerbalken (15, 16, 17) an den Armabschnitten (12B, 12C; 13B, 13C; 14B, 14C) der jeweiligen U-förmigen oberen Platte (12, 13, 14) befestigen,
wobei die Batteriemodulträgerbalken (15, 16, 17) von zwei angrenzenden Batteriemontageeinheiten zur Aufnahme eines jeweiligen Batteriemoduls (2, 3, 4, 5, 6, 7) voneinander beabstandet sind.

2. Straßenfahrzeug (1) nach Anspruch 1, wobei der Basisabschnitt (12A, 13A, 14A) der U-förmigen oberen Platte (12, 13, 14) in einem mittleren Abschnitt schmaler ist als an den Endabschnitten, die an die Armabschnitte (12B, 12C; 13B, 13C; 14B, 14C) angrenzen.

3. Straßenfahrzeug (1) nach Anspruch 1 oder 2, wobei der Basisabschnitt (12A, 13A, 14A) der U-förmigen oberen Platte (12, 13, 14) mit Aussparungen (19) versehen ist, um den Basisabschnitt (12A, 13A, 14A) der U-förmigen oberen Platte (12, 13, 14) mit diagonalen Querelementen (20, 21) zu versehen.

4. Straßenfahrzeug (1) nach einem der vorhergehenden Ansprüche, wobei die Dicke des Batteriemodulträgerbalkens (15, 16, 17) in seinem mittleren Abschnitt geringer ist als an seinen freien Enden (15A, 15B; 16A, 16B; 17A, 17B).

5. Straßenfahrzeug (1) nach einem der vorhergehenden Ansprüche, wobei die Höhe des Batteriemodulträgerbalkens (15, 16, 17) in seinem mittleren Abschnitt größer ist als an seinen freien Enden (15A, 15B; 16A, 16B; 17A, 17B).

6. Straßenfahrzeug (1) nach einem der vorhergehenden Ansprüche, wobei das Batteriemodul (2, 3, 4, 5, 6, 7) mittels elastischer Verbinder (22) auf den Batteriemodulträgerbalken (15, 16, 17) getragen wird.

## Revendications

1. Véhicule routier (1) équipé :
- d'un module de batterie (2, 3, 4, 5, 6, 7) ;
- d'un châssis (8) comprenant une première poutre de châssis allongée (9) et d'une seconde poutre de châssis allongée (10), toutes deux s'étendant sur une longueur du véhicule routier (1), chaque première et seconde poutres de châssis allongées (9, 10) comprenant une surface supérieure (9A, 10A) et une surface inférieure (9B, 10B), une surface intérieure (9C, 10C) et une surface extérieure (9D, 10D), les surfaces intérieures (9C, 10C) des première et seconde poutres de châssis (9, 10) étant orientées l'une vers l'autre, les surfaces extérieures (9D, 10D) des première et seconde poutres de châssis allongées (9, 10) étant orientées à l'opposé l'une de l'autre ;
d'un système de montage de module de batterie (11) pour monter le module de batterie (2, 3, 4, 5, 6, 7) sur le châssis (8) ;
**caractérisé en ce que** le système de montage de batterie (11) comprend au moins deux unités de montage de batterie comprenant chacune :
- une plaque supérieure en forme de U (12, 13, 14) présentant une partie de base (12A, 13A, 14A) et des parties de bras (12B, 12C ; 13B, 13C ; 14B, 14C), chacune des parties de bras (12B, 12C ; 13B, 13C ; 14B, 14C) étant connectée à une certain respective des surfaces extérieures (9D, 10D) des première et seconde poutres de châssis (9, 10), la partie de base (12A, 13A, 14A) s'étendant horizontalement au-dessus des surfaces supérieures (9A, 10A) des première et seconde poutres de châssis allongées (9, 10) ;
- une poutre de support de module de batterie (15, 16, 17) s'étendant au-dessous et transversalement par rapport à la première ou à la seconde poutre de châssis allongée (9, 10), la poutre de support de module de batterie (15, 16, 17) présentant des extrémités libres (15A, 15B ; 16A, 16B ; 17A, 17B) positionnées vers l'extérieur à une certaine distance de la surface extérieure (9D, 10D) des première et seconde poutres de châssis allongées (9, 10) ; et
- des supports de fixation (18) fixant la poutre de support de module de batterie (15, 16, 17) aux parties de bras (12B, 12C ; 13B, 13C ; 14B, 14C) de la plaque supérieure en forme de U respective (12, 13, 14),
dans lequel les poutres de support de module de batterie (15, 16, 17) de deux unités de montage de batterie adjacentes sont espacées l'une de l'autre pour recevoir un module de batterie respectif (2, 3, 4, 5, 6, 7).

2. Véhicule routier (1) selon la revendication 1, dans lequel la partie de base (12A, 13A, 14A) de la plaque supérieure en forme de U (12, 13, 14) est plus étroite dans une section médiane qu'au niveau de sections d'extrémité adjacentes aux parties de bras (12B, 12C ; 13B, 13C ; 14B, 14C).

3. Véhicule routier (1) selon la revendication 1 ou 2, dans lequel la partie de base (12A, 13A, 14A) de la plaque supérieure en forme de U (12, 13, 14) est pourvue de découpes (19) pour fournir à la partie de base (12A, 13A, 14A) de la plaque supérieure en forme de U (12, 13, 14) des éléments transversaux diagonaux (20, 21).

4. Véhicule routier (1) selon l'une quelconque des revendications précédentes, dans lequel l'épaisseur de la poutre de support de module de batterie (15, 16, 17) est plus petite dans une section médiane de celle-ci qu'au niveau des extrémités libres (15A, 15B ; 16A, 16B ; 17A, 17B) de celle-ci.

5. Véhicule routier (1) selon l'une quelconque des revendications précédentes, dans lequel la hauteur de la poutre de support de module de batterie (15, 16, 17) est plus grande dans une section médiane de celle-ci qu'au niveau des extrémités libres (15A, 15B ; 16A, 16B ; 17A, 17B) de celle-ci.

6. Véhicule routier (1) selon l'une quelconque des revendications précédentes, dans lequel le module de batterie (2, 3, 4, 5, 6, 7) est supporté sur les poutres de support de module de batterie (15, 16, 17) par l'intermédiaire de connecteurs élastiques (22).
